# EUROPÄISCHE PATENTANMELDUNG

(11) **EP 4 137 900 A1**
(43) Veröffentlichungstag der Anmeldung: **22.02.2023**
(21) Anmeldenummer: 21191974.1
(22) Anmeldetag: 18.08.2021
(51) Int. Cl.: G05B 23/02

(54) **ALARMASSOZIIERTE CONTAINER IN ANLAGENBILDERN TECHNISCHER ANLAGEN**

(71) Anmelder: Siemens Aktiengesellschaft, 80333 München (DE)
(72) Erfinder: Lutz, Benjamin, 76327 Pfinztal (DE)

(57) **Zusammenfassung**

Vorgeschlagen wird ein Leitsystem (1) für eine technische Anlage, insbesondere Prozess- oder Fertigungsanlage, das einen Operator Station Server (2) und einen Operator Station Client (3) aufweist, wobei der Operator Station Server (2) dazu ausgebildet ist, zur Bedienung und Beobachtung ein Anlagenbild (11) der technischen Anlage an den Operator Station Client (3) zu übertragen, wobei das Anlagenbild (11) wenigstens ein variables Bildelement (12) umfasst, und wobei der Operator Station Client (3) dazu ausgebildet ist, das Anlagenbild (11) mit dem variablen Bildelement (12) einem Operator der technischen Anlage visuell, und gegebenenfalls akustisch, darzustellen, und wobei auf dem Operator Station Server (2) ein Alarmdienst (8) implementiert ist, der dazu ausgebildet ist, im Leitsystem (1) aufkommende Alarmmeldungen (8) zur Darbietung für den Operator an den Operator Station Client (3) zu übertragen. Das Leitsystem (1) ist dadurch gekennzeichnet, dass es dazu ausgebildet ist, das variable Bildelement (12) mit einer Referenz auf eine bestimmte aufkommbare Alarmmeldung und die bestimmte aufkommbare Alarmmeldung und/oder das variable Bildelement (12) mit einer Referenz auf ein Objekt (149 zu versehen, derart, dass bei einem Aufkommen der bestimmten aufkommbaren Alarmmeldung das Objekt (14) in dem variablen Bildelement (12) visuell und gegebenenfalls akustisch dargestellt wird.

## Beschreibung

Die Erfindung betrifft ein Leitsystem für eine technische Anlage, insbesondere Prozess- oder Fertigungsanlage, das einen Operator Station Server und einen Operator Station Client aufweist, wobei der Operator Station Server dazu ausgebildet ist, zur Bedienung und Beobachtung ein Anlagenbild der technischen Anlage an den Operator Station Client zu übertragen, wobei das Anlagenbild wenigstens ein variables Bildelement umfasst, und wobei der Operator Station Client dazu ausgebildet ist, das Anlagenbild mit dem variablen Bildelement einem Operator der technischen Anlage visuell, und gegebenenfalls akustisch, darzustellen, und wobei auf dem Operator Station Server ein Alarmdienst implementiert ist, der dazu ausgebildet ist, im Leitsystem aufkommende Alarmmeldungen zur Darbietung für den Operator an den Operator Station Client zu übertragen. Außerdem betrifft die Erfindung ein Verfahren zur visuellen Darstellung eines Anlagenbildes einer technischen Anlage.

Für die Bedienung und Beobachtung verfahrenstechnischer Anlagen erstellen Leitsysteme der verfahrenstechnischen Anlagen symbolische Anlagenbilder, die die verfahrenstechnischen Zusammenhänge - insbesondere zwischen einzelnen Prozessobjekten der verfahrenstechnischen Anlagen - abstrahiert darstellen.

Anlagenbilder setzen sich aus statischen Symbolen (z.B. Leitungen, Rechtecke, usw.), dynamisierten Symbolen (z.B. Leitungen mit Farbumschlag oder Rechtecke mit Füllständen, die sich in Abhängigkeit von Prozessmesswerten ändern), Blocksymbolen (zur dynamisierten Visualisierung verfahrenstechnischer Prozessobjekte), komplexen Controls (z.B. Trendanzeigen, Meldefolgeanzeigen, usw.) und Containern zusammen, in welchen Inhalte aus unabhängigen und eigenständige Quellen visualisiert werden können. Bei diesen Quellen kann es sich beispielsweise um Webcams, Anlagenbilder modularer Anlagenteile (sogenannte "Package Units"), Apps (z.B. Regleroptimierer, KPI-Berechnungen) und dergleichen handeln.

Die Container werden durch unterschiedliche Technologien realisiert. In modernen weborientierten Leitsystemen können hierzu sogenannte "iFrames" verwendet werden, die beispielsweise in der von der Firma SIEMENS verwendeten SWAC-Technologie Anwendung finden (SWAC steht hierbei für "Siemens Web Application Collaboration").

Auch die zuvor genannten komplexen Controls (Trendanzeigen, XY-Graphen, Meldefolgeanzeigen, SFC-Schrittketten, CFC-Visualisierung, Batch, usw.) können mithilfe von Containern in Anlagenbilder eingebettet werden, da so die zugrunde liegenden Applikationen serverseitig entkoppelt und verteilt werden können, um ein höheres Maß an Robustheit zu erreichen.

Falls beispielsweise mehrere Webcams eine Sicht in Echtzeit auf verfahrenstechnische Anlagenteile ermöglichen sollen, so ist für jede Webcam ein Container in einem Anlagenbild zu projektieren. Tritt in einem verfahrenstechnischen Anlagenteil ein Alarm auf, so muss das entsprechende Anlagenbild mit der Webcam geöffnet werden, welches die Sicht auf den jeweiligen Anlagenteil bereitstellt. Oftmals reichen für die effiziente Behandlung von komplexen Alarmen weder Meldetexte noch Sichten in Echtzeit aus - weiterer Kontext wie beispielsweise P&ID Diagramme, Auszüge aus Betriebshandbüchern und dergleichen kann vonnöten sein.

Bekannte Leitsysteme, die einem Operator Anlagenbilder mit verschiedenen Objekten wie Container visuell darbieten, sind beispielsweise in der WO 2020/064712 A1 und der EP 3680740 A1 offenbart.

Der Erfindung liegt die Aufgabe zugrunde, ein Leitsystem für eine technische Anlage anzugeben, das einem Operator des Leitsystems einen übersichtlicheren Überblick über einen Betriebszustand der technischen Anlage ermöglichen und den Operator im Fall eines Alarmzustandes der technischen Anlage zielgerichtet Informationen zur Behebung des Alarmzustandes zur Verfügung stellen kann.

Diese Aufgabe wird gelöst durch ein Leitsystem für eine technische Anlage, insbesondere eine Fertigungs- oder Prozessanlage, mit den Merkmalen des Anspruchs 1. Zudem wird die Aufgabe gelöst durch ein Verfahren zum Betrieb einer technischen Anlage, insbesondere Prozess- oder Fertigungsanlage, mit den Merkmalen des Anspruchs 9. Vorteilhafte Weiterbildungen ergeben sich aus den abhängigen Ansprüchen.

Ein Leitsystem eingangs beschriebener Art weist einen Operator Station Server und einen Operator Station Client. Dabei ist der Operator Station Server dazu ausgebildet, zur Bedienung und Beobachtung ein Anlagenbild der technischen Anlage an den Operator Station Client zu übertragen, wobei das Anlagenbild wenigstens ein variables Bildelement umfasst. Der Operator Station Client ist dazu ausgebildet, das Anlagenbild mit dem variablen Bildelement einem Operator der technischen Anlage visuell, und gegebenenfalls akustisch, darzustellen. Dabei ist auf dem Operator Station Server ein Alarmdienst implementiert, der dazu ausgebildet ist, im Leitsystem aufkommende Alarmmeldungen zur Darbietung für den Operator an den Operator Station Client zu übertragen.

Das Leitsystem ist erfindungsgemäß dadurch gekennzeichnet, dass es dazu ausgebildet ist, das variable Bildelement mit einer Referenz auf eine bestimmte aufkommbare Alarmmeldung und die bestimmte aufkommbare Alarmmeldung und/oder das variable Bildelement mit einer Referenz auf ein Objekt zu versehen, derart, dass bei einem Aufkommen der bestimmten aufkommbaren Alarmmeldung das Objekt in dem variablen Bildelement visuell und gegebenenfalls akustisch dargestellt wird.

Unter einem Leitsystem wird im vorliegenden Kontext ein computergestütztes technisches System verstanden, das Funktionalitäten zum Darstellen, Bedienen und Leiten eines technischen Systems wie einer Fertigungs- oder Produktionsanlage umfasst. Das Leitsystem kann neben dem Operator Station Server und dem Operator Station Client beispielsweise auch sogenannte prozess- oder fertigungsnahe Komponenten umfassen, die zur Ansteuerung von Aktoren bzw. Sensoren dienen.

Bei der technischen Anlage kann es sich um eine Anlage aus der Prozessindustrie wie beispielsweise eine chemische, pharmazeutische, petrochemische oder eine Anlage aus der Nahrungs- und Genussmittelindustrie handeln. Hiermit umfasst sind auch jegliche Anlagen aus der Produktionsindustrie, Werke, in denen z.B. Autos oder Güter aller Art produziert werden. Technische Anlagen, die zur Durchführung des erfindungsgemäßen Verfahrens geeignet sind, können auch aus dem Bereich der Energieerzeugung kommen. Windräder, Solaranlagen oder Kraftwerke zur Energieerzeugung sind ebenso von dem Begriff der technischen Anlage umfasst.

Unter einem "Operator Station Server" wird vorliegend ein Server verstanden, der zentral Daten eines Bedien- und Beobachtungssystems sowie in der Regel Alarm- und Messwertarchive eines Leitsystems einer technischen Anlage erfasst und Benutzern zur Verfügung stellt. Der Operator Station Server stellt in der Regel eine Kommunikationsverbindung zu Automatisierungssystemen (wie einem Automatisierungsgerät) der technischen Anlage her und gibt Daten der technischen Anlage an sogenannte "Operator Station Clients" weiter, die zur Bedienung und Beobachtung eines Betriebs der einzelnen Funktionselemente der technischen Anlage dienen.

Der Operator Station Server kann selbst über Client-Funktionen verfügen, um auf die Daten (Archive, Meldungen, Tags, Variablen) anderer Operator Station Server zuzugreifen. Dadurch sind Bilder eines Betriebs der technischen Anlage auf dem Operator Station Server mit Variablen anderer Operator Station Server (Server-Server-Kommunikation) kombinierbar. Bei dem Operator Station Server kann es sich, ohne sich darauf zu beschränken, um einen SIMATIC PCS 7 Industrial Workstation Server der Firma SIEMENS handeln.

Unter einem Operator wird ein menschlicher Bediener der technischen Anlage verstanden. Der Operator interagiert mittels spezieller Benutzerschnittstellen mit der technischen Anlage bzw. dessen Leitsystem und steuert spezielle technische Funktionen der Anlage. Hierzu kann der Operator das Bedien- und Beobachtungssystem des Leitsystems mit dem Operator Station Server und dem Operator Station Client nutzen.

Bei dem Anlagenbild, welches der Operator Station Server an den Operator Station Client zur visuellen Darstellung überträgt, handelt es sich um ein üblicherweise für Leitsysteme verwendetes Bedienbild, welches grafische Repräsentationen einzelner Elemente der technischen Anlage umfasst und zur Darstellung eines Status der einzelnen Elemente, eines (z.B. verfahrenstechnischen) Zusammenhangs zwischen den Elementen oder dgl. dient. Die einzelnen Elemente der technischen Anlage werden in dem Anlagenbild durch jeweilige Bildelemente graphisch repräsentiert. Das Anlagenbild umfasst vorliegend wenigstens ein variables Bildelement.

Das variable Bildelement weist einen zu einer Laufzeit der technischen Anlage veränderbaren Inhalt auf, insbesondere eine Echtzeit-Bilddatenquelle, ein weiteres Anlagenbild, ein Video oder ein Dokument wie ein Rohrleitungsplan der technischen Anlage. Das variable Bildelement kann auch eine Trendanzeige für Messwerte der technischen Anlage, eine Meldefolgeanzeige für Meldungen des Leitsystems oder eine Regleroptimierungsfunktion visuell (und ggf. zusätzlich akustisch) darstellen. Man kann das variable Bildelement mit anderen Worten auch als einen sogenannten (Web-)Container bezeichnen, der variabel mit dynamisch veränderbarem Inhalt gefüllt sein kann.

Eine Alarmmeldung ist eine Meldung, die eine in der Regel unverzügliche Reaktion des Operators der technischen Anlage erfordert. Unter einer Meldung wird dabei ein Bericht vom Eintreten eines Ereignisses verstanden, das einen Übergang aus einem diskreten Zustand innerhalb der technischen Anlage in einen anderen diskreten Zustand darstellt.

Im Rahmen einer Projektierung einer Automatisierung der technischen Anlage wird unter anderem festgelegt, welche Komponenten der technischen Anlage unter welchen Bedingungen ein Aufkommen einer Alarmmeldung bedingen können. Beispielsweise kann festgelegt werden, dass eine Alarmmeldung erzeugt wird (bzw. aufkommt), wenn der Druck in einem Kessel einen bestimmten Schwellwert übersteigt.

Das erfindungsgemäße Leitsystem ermöglicht eine feingranulare Indikation des Ladezustandes des Bildelements für eine effizientere Bedienung und Beobachtung der technischen Anlage. Der Operator erhält durch das Leitsystem Kenntnis darüber, ab wann das aufgeschlagene Anlagenbild mit dem wenigstens einen Bildelement vollständig beobachtet werden kann, bzw. welche Anteile des Bildelementes noch nachgeladen werden (müssen).

Das Leitsystem ist erfindungsgemäß dazu ausgebildet, das variable Bildelement mit einer Referenz auf eine bestimmte aufkommbare Alarmmeldung zu versehen. Die bestimmte aufkommbare Alarmmeldung ist wiederum mit einer Referenz auf ein Objekt versehbar. Die Referenzen können im Rahmen der Projektierung einer Automatisierung der technischen Anlage festgelegt werden. Es ist aber auch möglich, dass der Operator die Referenzen zu einer Laufzeit der technischen Anlage neu angelegt oder ändert. Es ist zudem möglich, dass die Referenzen von dem Leitsystem aufgrund bestimmter Bedingungen automatisch erzeugt werden.

Wenn eine aufkommbare Alarmmeldung tatsächlich aufkommt, wird das referenzierte Objekt im Rahmen des variablen Bildelements visuell und ggf. zusätzlich akustisch dargestellt. Ein Objekt kann beispielsweise eine Echtzeit-Bilddatenquelle, ein weiteres Anlagenbild ein Video oder ein Dokument darstellen.

Die Referenz auf das darzustellende Objekt kann mit der Alarmmeldung und/oder dem variablen Bildelement verbunden sein. Wichtig ist nur, dass bei einem Auftreten einer Alarmmeldung, die einen vorherbestimmten Typ aufweist, in einem zugewiesene variablen Bildelement das vorherbestimmte Objekt visuell (und ggf. akustisch) dargestellt wird.

Das erfindungsgemäße Leitsystem ist demnach in besonders vorteilhafter Weise dazu ausgebildet, alarmassoziierte dynamische Bildelemente (Container) in Anlagenbildern (z.B. verfahrenstechnischen Anlagenbildern) für eine verbesserte Bediendung und Beobachtung der technischen Anlage zu erzeugen. Das Leitsystem ermöglicht es, Anlagenbilder (insbesondere Übersichtsbilder) platzsparender zu gestalten, wenn Inhalte aus unabhängigen und eigenständigen Quellen (z.B. von einem Webserver gehosteten Objekte) integriert werden sollen. Für die Behandlung komplexer Alarme stellt das Leitsystem effizienter und zielgerichtet einen (beliebigen) Kontext bereit. Außerdem ermöglicht es das erfindungsgemäße Leitsystem, dass ein Operator nur mit den Informationen konfrontiert wird, die er zielgerichtet für die Behandlung der Alarmmeldung Alarm benötigt.

Das Leitsystem kann dazu ausgebildet sein, in dem variablen Bildelement bei einer aufkommenden, referenzierten Alarmmeldung zusätzlich zu dem referenzierten Objekt noch Informationen die Alarmmeldung betreffend darzustellen, insbesondere einen Alarmmeldungstext. Dadurch erhält der Operator zielgerichtet sowohl die Informationen aus dem referenzierten Objekt wie auch aus der Alarmmeldung.

Das Leitsystem ist nicht auf die Darstellung / Verarbeitung eines Anlagenbildes mit einem einzigen variablen Bildelement beschränkt. Vielmehr kann das Anlagenbild eine Mehrzahl von variablen Bildelementen umfassen, wobei das Leitsystem dazu ausgebildet ist, die variablen Bildelemente jeweils mit einer Referenz auf eine bestimmte aufkommbare Alarmmeldung und die bestimmte aufkommbare Alarmmeldung und/oder die variablen Bildelemente mit einer Referenz auf ein Objekt zu versehen, derart, dass bei einem Aufkommen der bestimmten aufkommenden Alarmmeldung das Objekt jeweils in dem variablen Bildelement visuell und gegebenenfalls akustisch dargestellt wird, wobei sich die bestimmten aufkommbaren Bildelemente und die Objekte voneinander unterscheiden können.

Ebenfalls ist das Leitsystem nicht darauf beschränkt, nur eine einzige aufkommbare Alarmmeldung in einem jeweiligen variablen Bildelement zu referenzieren. Vielmehr kann das Leitsystem dazu ausgebildet sein, das variable Bildelement mit einer Mehrzahl von Referenzen auf bestimmte aufkommbare Alarmmeldungen und die bestimmten aufkommbaren Alarmmeldungen und/oder die variablen Bildelemente jeweils mit einer Referenz auf ein Objekt zu versehen, derart, dass bei einem Aufkommen eines der bestimmten aufkommbaren Alarmmeldungen das jeweilige referenzierte Objekt in dem variablen Bildelement visuell und gegebenenfalls akustisch dargestellt wird.

Dabei ist das Leitsystem bevorzugt dazu ausgebildet, für den Fall, dass mehrere der referenzierten aufkommbaren Alarmmeldungen in einem gleichen Zeitraum aufkommen, dasjenige Objekt in dem variablen Bildelement darzustellen, welches von derjenigen aufkommenden Alarmmeldung referenziert ist, welche eine höchste Priorität oder einen jüngsten Zeitrang aufweist oder welche nicht quittiert ist. Es erfolgt damit eine automatisierte Priorisierung der dazustellenden Objekte nach vorgebbaren Kriterien. Dadurch kann dem Operator besonders effektiv die am kritischsten erachtete Alarmmeldung mit dem referenzierten Objekt dargestellt werden, so dass dieser unverzüglich Maßnahmen einleiten kann.

Das Leitsystem kann auch dazu ausgebildet sein, für den Fall, dass mehrere der referenzierten aufkommbaren Alarmmeldungen in einem gleichen Zeitraum aufkommen, die von den aufkommenden Alarmmeldungen referenzierten Objekte von einem Operator des Leitsystems manuell wechselbar oder in einem automatischen zeitlichen Wechsel darzustellen. Der Operator kann dadurch einen verbesserten Überblick über Alarmmeldungen betreffende Objekte (wie beispielsweise eine Mehrzahl von Kamerabildern) erhalten.

Solange keine von einem variablen Bildelement referenzierte Alarmmeldung aufkommt, kann das variable Bildelement ein initiales Objekt darstellen, welches von keiner referenzierten Allarmmeldungen referenziert ist (also ein "neutrales" drittes Objekt). Mit anderen Worten kann das Leitsystem dazu ausgebildet sein, in einem Zeitbereich, in dem keine der bestimmten Alarmmeldungen aufkommt, in dem variablen Bildelement eine visuelle und ggf. akustische Darstellung eines von dem oder den referenzierten Objekten verschiedenen Objektes zu erzeugen. Die initiale Bilddarstellung kann während der Projektierung der Automatisierung und/oder vom Operator vorgegeben werden.

Die zuvor formulierte Aufgabe wird zudem gelöst durch ein Verfahren zum Betrieb einer technischen Anlage, insbesondere Prozess- oder Fertigungsanlage, die ein Leitsystem aufweist, welches einen Operator Station Server und einen Operator Station Client aufweist, und wobei der Operator Station Client dazu ausgebildet ist, das Anlagenbild mit dem variablen Bildelement einem Operator der technischen Anlage visuell, und gegebenenfalls akustisch, darzustellen, und wobei auf dem Operator Station Server ein Alarmdienst implementiert ist, der dazu ausgebildet ist, im Leitsystem aufkommende Alarmmeldungen zur Darbietung für den Operator an den Operator Station Client zu übertrage.

Das Verfahren umfasst die folgenden Schritte:
a) Versehen des variablen Bildelementes mit einer Referenz auf eine bestimmte aufkommbare Alarmmeldung,
b) Versehen der bestimmten aufkommbaren Alarmmeldung mit einer Referenz auf ein Objekt,
c) Bei einem Aufkommen der bestimmten aufkommbaren Alarmmeldung, visuelle und gegebenenfalls akustische Darstellung des Objektes in dem variablen Bildelement durch den Operator Station Client.

Bevorzugt wird dabei eine Mehrzahl von variablen Bildelementen jeweils mit einer Referenz auf eine oder mehrere bestimmte aufkommbare Alarmmeldungen versehen, und bei dem die bestimmte aufkommbare oder die bestimmten aufkommbaren Alarmmeldungen jeweils mit einer Referenz auf ein Objekt versehen werden, wobei es sich um ein einziges Objekte oder um eine Mehrzahl von Objekte handeln kann, wobei bei einem Aufkommen einer der bestimmten aufkommbaren Alarmmeldungen eine visuelle und gegebenenfalls akustische Darstellung des Objektes oder der Objekte in dem oder den variablen Bildelementen durch den Operator Station Client erfolgt.

Im Rahmen einer vorteilhaften Weiterbildung der Erfindung wird in dem variablen Bildelement bei einer aufkommenden, referenzierten Alarmmeldung zusätzlich zu dem referenzierten Objekt noch Informationen die Alarmmeldung betreffend dargestellt, insbesondere eine Alarmmeldungstext.

Das variable Bildelement kann mit einer Mehrzahl von Referenzen auf bestimmte aufkommbare Alarmmeldungen und die bestimmten aufkommbaren Alarmmeldungen jeweils mit einer Referenz auf ein Objekt versehen werden, derart, dass bei einem Aufkommen eines der bestimmten aufkommbaren Alarmmeldungen das jeweilige referenzierte Objekt in dem variablen Bildelement visuell und gegebenenfalls akustisch dargestellt wird.

Bevorzugt wird für den Fall, dass mehrere der referenzierten aufkommbaren Alarmmeldungen in einem gleichen Zeitraum aufkommen, das Objekt in dem variablen Bildelement dargestellt, welches von derjenigen aufkommenden Alarmmeldung referenziert ist, welche eine höchste Priorität oder einen jüngsten Zeitrang aufweist oder welche nicht quittiert ist.

Alternativ oder zusätzlich können für den Fall, dass mehrere der referenzierten aufkommbaren Alarmmeldungen in einem gleichen Zeitraum aufkommen, die von den aufkommenden Alarmmeldungen referenzierten Objekte von einem Operator des Leitsystems manuell wechselbar oder in einem automatischen zeitlichen Wechsel dargestellt werden.

Vorteilhafterweise kann in einem Zeitbereich, in dem keine der bestimmten Alarmmeldungen aufkommt, in dem variablen Bildelement eine visuelle und ggf. akustische Darstellung eines von dem oder den referenzierten Objekten verschiedenen Objektes erzeugt werden.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung eines Ausführungsbeispiels, das im Zusammenhang mit den Zeichnungen näher erläutert wird. Es zeigen:
- FIG 1: ein erfindungsgemäßes Leitsystem in einer Prinzipskizze;
- FIG 2: ein Objektmodell eines erfindungsgemäßen Leitsystems;
- FIG 3: eine erste visuelle Darstellung eines Anlagenbildes durch ein erfindungsgemäßes Leitsystem; und
- FIG 4: eine zweite visuelle Darstellung eines Anlagenbildes durch ein erfindungsgemäßes Leitsystem.

In FGI 1 ist ein Teil eines erfindungsgemäßen Leitsystems 1 einer als Prozessanlage, d.h. als verfahrenstechnische Anlage, ausgebildeten technischen Anlage dargestellt. Das Leitsystem 1 umfasst einen Operator Station Server 2 und einen Operator Station Client 3.

Der Operator Station Server 2 und der Operator Station Client 3 sind über einen Terminalbus 4 miteinander und optional mit nicht dargestellten weiteren Komponenten des Leitsystems 1 wie einem Prozessdatenarchiv verbunden.

Ein Benutzer bzw. Operator kann zum Zwecke des Bedienens und Beobachtens über den Operator Station Client 3 mittels des Terminalbus 4 auf den Operator Station Server 2 zugreifen. Der Terminalbus 4 kann, ohne sich darauf zu beschränken, beispielsweise als Industrial Ethernet ausgebildet sein.

Der Operator Station Server 2 weist eine Geräteschnittstelle 5 auf, die mit einem Anlagenbus 6 verbunden ist. Über diese Geräteschnittstelle 5 kann der Operator Station Server 2 mit einem Automatisierungsgerät 7 sowie mit optional vorhandenen weiteren Komponenten der Prozessanlage kommunizieren. Der Anlagenbus 6 kann, ohne sich darauf zu beschränken, beispielsweise als Industrial Ethernet ausgebildet sein. Das Automatisierungsgerät 7 kann mit einer beliebigen Anzahl an Subsystemen (nicht dargestellt) verbunden sein.

Auf dem Operator Station Server 2 sind ein Alarmmeldungsdienst 8, ein Prozessabbild 9 und ein Visualisierungsdienst 10 implementiert. Der Operator Station Client 3 ist dazu ausgebildet, ein Anlagenbild 11 mit einem variablen Bildelement 12 darzustellen, worauf im weiteren Verlauf detailliert eingegangen wird.

Das Automatisierungsgerät 7 ist dazu ausgebildet, eine Automatisierung einer technischen Anlage zu steuern und zu überwachen. Hierzu ist auf dem Automatisierungsgerät ein Steuerprogramm 13 implementiert, welches im Rahmen einer Projektierung der Automatisierung der technischen Anlage auf das Automatisierungsgerät 7 geladen worden ist. Tritt beim Betrieb der technischen Anlage ein fehlerhafter Zustand auf, erzeugt das Automatisierungsgerät 7 gemäß vorbestimmter Regeln eine Alarmmeldung, die an das Prozessabbild 9 des Operator Station Servers 2 übertragen wird.

Der Alarmmeldungsdient 8 übermittelt dem Visualisierungsdienst 10 die Information über die neu erzeugte / aufgekommene Alarmmeldung. Der Visualisierungsdienst 10 prüft darauf hin, ob die Alarmmeldung mit dem variablen Bildelement 12 assoziiert ist, d.h., ob das variable Bildelement 12 eine Referenz auf die Alarmmeldung aufweist. Genau genommen weist das variable Bildelement 12 dabei nicht eine Referenz auf die (instanziierte) Alarmmeldung, sondern auf den Typ der Alarmmeldung auf. Dies wird in der vorliegenden Offenbarung dadurch ausgedrückt, dass das variable Bildelement 12 eine Referenz auf eine bestimmte "aufkommbare" Alarmmeldung aufweist. Der Visualisierungsdienst 10 kann pauschal jede aufkommende Alarmmeldung prüfen, ob der zugrunde liegende Typ der jeweiligen Alarmmeldung von einem variablen Bildelement 12 referenziert ist. Die Alarmmeldung(en) kann aber auch ein spezielles, zusätzliches Attribut aufweisen, welches auf die Assoziierung mit dem variablen Bildelement 12 hinweist, so dass der Visualisierungsdienst 10 weniger Kapazitäten für die Erkennung der Referenzen aufwenden muss.

Liegt eine solche Referenz bei der erzeugten / aufgekommenen Alarmmeldung vor, bestimmt der Visualisierungsdienst 10, dass in dem variablen Bildelement 12 ein Objekt 14 visuell und ggf. akustisch dargestellt wird, welches von der Alarmmeldung referenziert ist. Alternativ oder zusätzlich kann die Referenz auf das darzustellende Objekt 14 auch mit dem variablen Bildelement 12 verbunden sein. Wichtig ist nur, dass bei einem Auftreten einer Alarmmeldung, die einen vorherbestimmten Typ aufweist, in einem zugewiesene variablen Bildelement 12 das vorherbestimmte Objekt 14 visuell (und ggf. akustisch) dargestellt wird. Das vorherbestimmte Objekt 14 muss dabei über von dem Visualisierungsdienst 10 in die Bilderzeugung für den Operator Station Client 3 einbindbar sein.

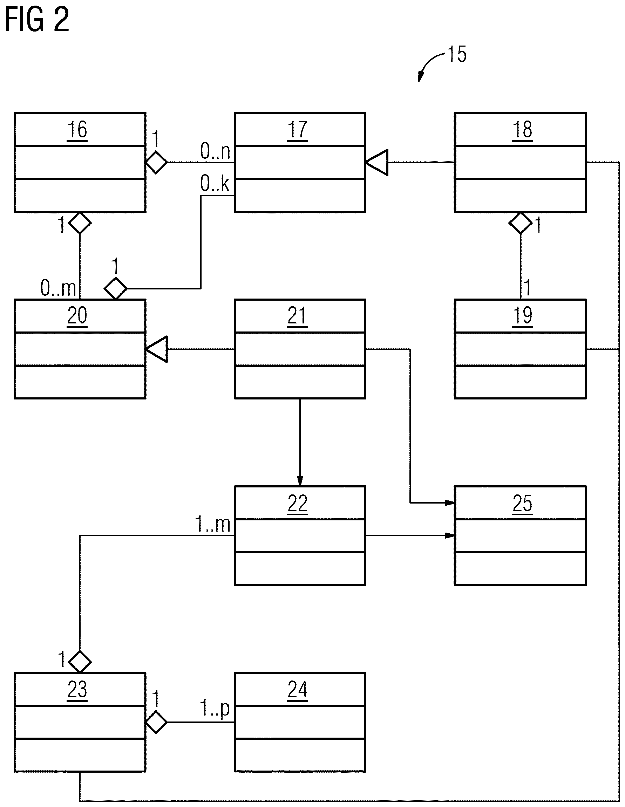

In FIG 2 ist ein zu dem Leitsystem 1 gehöriges Objektmodell 15 dargestellt. Ein Anlagenbild 16 setzt sich aus 1 bis n Bildelementen 17 (Screen Items) zusammen. Eine Spezialisierung eines Bildelementes 18 ist beispielsweise ein Blocksymbol eines technischen Objektes der technischen Anlage, welches wiederum beispielsweise ein Anwenderobjekt 19 (auch als "Faceplate" bezeichnet) darstellen kann.

Das Anlagenbild 16 kann 1 bis m weitere Anlagenbilder 20 umfassen (auch als "Screen Windows" bezeichnet), die innerhalb des Anlagenbildes 16 dargestellt werden können. Ein spezielles dieser weiteren Anlagenbilder 20 ist ein dynamisches Bildelement 21. Instanzen dieses dynamischen Bildelementes 21 können Referenzen auf Typen von Alarmmeldungen 22 aufweisen. Die Alarmmeldungen 22 sind wiederum mit technischen Objekten 23 bzw. den dazugehörigen Tags 24 verknüpft. Die Alarmmeldungen 22 und die dynamischen Bildelemente 21 weisen jeweils eine Referenz auf ein Objekt 25 auf, welches zuvor schon erläutert wurde.

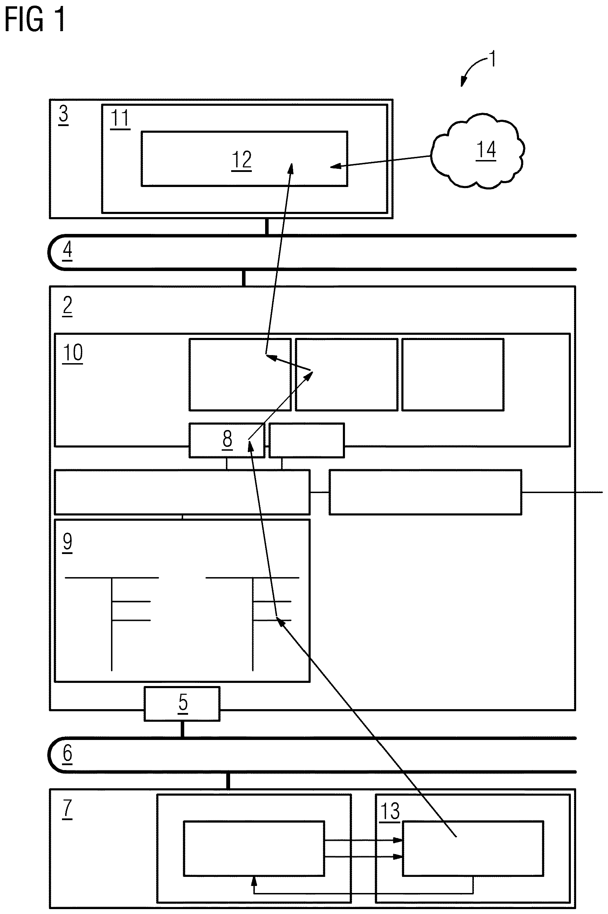

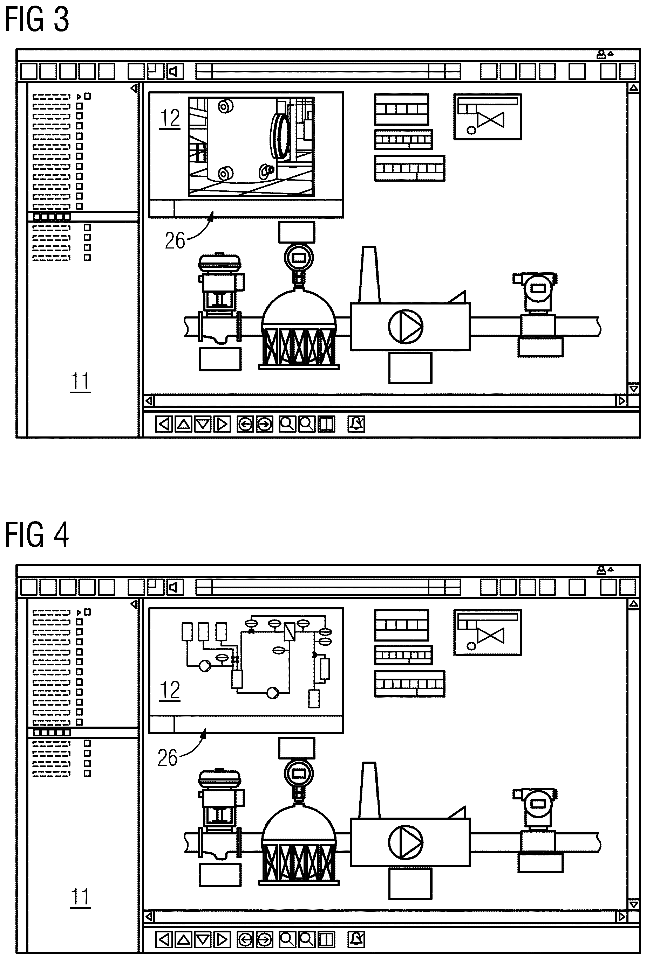

In FIG 3 ist das Anlagenbild 11 aus FIG 1 vergrößert und ohne weitere Teile des Leitsystems 1 dargestellt. Es ist zu erkennen, dass das Anlagenbild 11 neben verschiedenen Symbolen ein variables Bildelement 12 aufweist, welches durch eine dickere Umrandung gekennzeichnet ist. In dem variablen Bildelement 12 ist ein Kamerabild 14 dargestellt, welches ein verfahrenstechnisches Objekt zeigt. In einem unteren Bereich 26 des variablen Bildelementes 12 ist ein Buchstabe "A" dargestellt, was einen Operator des Leitsystems 1 darauf hinweist, dass eine Alarmmeldung vorliegt. Zusätzlich sind weitere Details der Alarmmeldung wie eine Meldezeit und ein Meldedatum dargestellt.

FIG 4 zeigt das Anlagenbild 11 aus FIG 3, wobei in dem variablen Bildelement 12 ein Rohrleitungsplan einer verfahrenstechnischen Anlage dargestellt ist.

Insgesamt kann durch die Erfindung ein Beitrag für eine höhere Verlässlichkeit und eine verbesserte Bedienbarkeit des Leitsystems der technischen Anlage geleistet werden, speziell bei Anwendung eines webbasierten Leitsystems.

## Patentansprüche

1. Leitsystem (1) für eine technische Anlage, insbesondere Prozess- oder Fertigungsanlage, das einen Operator Station Server (2) und einen Operator Station Client (3) aufweist, wobei der Operator Station Server (2) dazu ausgebildet ist, zur Bedienung und Beobachtung ein Anlagenbild (11) der technischen Anlage an den Operator Station Client (3) zu übertragen, wobei das Anlagenbild (11) wenigstens ein variables Bildelement (12) umfasst,
und wobei der Operator Station Client (3) dazu ausgebildet ist, das Anlagenbild (11) mit dem variablen Bildelement (12) einem Operator der technischen Anlage visuell, und gegebenenfalls akustisch, darzustellen,
und wobei auf dem Operator Station Server (2) ein Alarmdienst (8) implementiert ist, der dazu ausgebildet ist, im Leitsystem (1) aufkommende Alarmmeldungen (8) zur Darbietung für den Operator an den Operator Station Client (3) zu übertragen,
**dadurch gekennzeichnet, dass**
das Leitsystem (1) dazu ausgebildet ist, das variable Bildelement (12) mit einer Referenz auf eine bestimmte aufkommbare Alarmmeldung und die bestimmte aufkommbare Alarmmeldung und/oder das variable Bildelement (12) mit einer Referenz auf ein Objekt (149 zu versehen, derart, dass bei einem Aufkommen der bestimmten aufkommbaren Alarmmeldung das Objekt (14) in dem variablen Bildelement (12) visuell und gegebenenfalls akustisch dargestellt wird.

2. Leitsystem (1) nach Anspruch 1, bei dem das Anlagenbild (11) eine Mehrzahl von variablen Bildelementen (12) umfasst, wobei das Leitsystem (1) dazu ausgebildet ist, die variablen Bildelemente (12) jeweils mit einer Referenz auf eine bestimmte aufkommbare Alarmmeldung und die bestimmte aufkommbare Alarmmeldung und/oder die variablen Bildelemente (12) mit einer Referenz auf ein Objekt (14) zu versehen, derart, dass bei einem Aufkommen der bestimmten aufkommenden Alarmmeldung das Objekt jeweils in dem variablen Bildelement (12) visuell und gegebenenfalls akustisch dargestellt wird, wobei sich die bestimmten aufkommbaren Bildelemente und die Objekte (14) voneinander unterscheiden können.

3. Leitsystem (1) nach Anspruch 1 oder 2, bei dem das Leitsystem (1) dazu ausgebildet ist, in dem variablen Bildelement (12) bei einer aufkommenden, referenzierten Alarmmeldung zusätzlich zu dem referenzierten Objekt (14) noch Informationen die Alarmmeldung betreffend darzustellen, insbesondere einen Alarmmeldungstext.

4. Leitsystem (1) nach einem der vorangegangenen Ansprüche, bei dem das Leitsystem (1) dazu ausgebildet ist, das variable Bildelement (12) mit einer Mehrzahl von Referenzen auf bestimmte aufkommbare Alarmmeldungen und die bestimmten aufkommbaren Alarmmeldungen und/oder die variablen Bildelemente (12) jeweils mit einer Referenz auf ein Objekt (14) zu versehen, derart, dass bei einem Aufkommen eines der bestimmten aufkommbaren Alarmmeldungen das jeweilige referenzierte Objekt (14) in dem variablen Bildelement (12) visuell und gegebenenfalls akustisch dargestellt wird.

5. Leitsystem (1) nach Anspruch 4, bei dem das Leitsystem (1) dazu ausgebildet ist, für den Fall, dass mehrere der referenzierten aufkommbaren Alarmmeldungen in einem gleichen Zeitraum aufkommen, dasjenige Objekt (14) in dem variablen Bildelement (12) darzustellen, welches von derjenigen aufkommenden Alarmmeldung referenziert ist, welche eine höchste Priorität oder einen jüngsten Zeitrang aufweist oder welche nicht quittiert ist.

6. Leitsystem (1) nach Anspruch 4, bei dem das Leitsystem (1) dazu ausgebildet ist, für den Fall, dass mehrere der referenzierten aufkommbaren Alarmmeldungen in einem gleichen Zeitraum aufkommen, die von den aufkommenden Alarmmeldungen und/oder den variablen Bildelementen (12) referenzierten Objekte (14) von einem Operator des Leitsystems (1) manuell wechselbar oder in einem automatischen zeitlichen Wechsel darzustellen.

7. Leitsystem nach einem der vorangegangenen Ansprüche, bei dem ein Objekt (14) eine Echtzeit-Bilddatenquelle, ein weiteres Anlagenbild ein Video oder ein Dokument darstellt.

8. Leitsystem nach einem der vorangegangenen Ansprüche, bei dem das Leitsystem (1) dazu ausgebildet ist, in einem Zeitbereich, in dem keine der bestimmten Alarmmeldungen aufkommt, in dem variablen Bildelement (12) eine visuelle und ggf. akustische Darstellung eines von dem oder den referenzierten Objekten (14) verschiedenen Objektes zu erzeugen.

9. Verfahren zum Betrieb einer technischen Anlage, insbesondere Prozess- oder Fertigungsanlage, die ein Leitsystem (1) aufweist, welches einen Operator Station Server (2) und einen Operator Station Client (3) aufweist, und wobei der Operator Station Client (3) dazu ausgebildet ist, ein Anlagenbild (11) mit einem variablen Bildelement (12) einem Operator der technischen Anlage visuell, und gegebenenfalls akustisch, darzustellen, und wobei auf dem Operator Station Server (2) ein Alarmdienst (8) implementiert ist, der dazu ausgebildet ist, im Leitsystem (1) aufkommende Alarmmeldungen zur Darbietung für den Operator an den Operator Station Client (3) zu übertragen, das Verfahren umfassend:
a) Versehen des variablen Bildelementes (12) mit einer Referenz auf eine bestimmte aufkommbare Alarmmeldung,
b) Versehen der bestimmten aufkommbaren Alarmmeldung mit einer Referenz auf ein Objekt (14),
c) Bei einem Aufkommen der bestimmten aufkommbaren Alarmmeldung, visuelle und gegebenenfalls akustische Darstellung des Objektes (14) in dem variablen Bildelement (12) durch den Operator Station Client (3).

10. Verfahren nach Anspruch 9, bei dem eine Mehrzahl von variablen Bildelementen jeweils mit einer Referenz auf eine oder mehrere bestimmte aufkommbare Alarmmeldungen versehen wird, und bei dem die bestimmte aufkommbare oder die bestimmten aufkommbaren Alarmmeldungen jeweils mit einer Referenz auf ein Objekt (14) versehen werden, wobei es sich um ein einziges Objekte (14) oder um eine Mehrzahl von Objekte (14) handeln kann, wobei bei einem Aufkommen einer der bestimmten aufkommbaren Alarmmeldungen eine visuelle und gegebenenfalls akustische Darstellung des Objektes (14) oder der Objekte (14) in dem oder den variablen Bildelementen (12) durch den Operator Station Client (3) erfolgt.

11. Verfahren nach Anspruch 9 oder 10, bei dem in dem variablen Bildelement (12) bei einer aufkommenden, referenzierten Alarmmeldung zusätzlich zu dem referenzierten Objekt (14) noch Informationen die Alarmmeldung betreffend dargestellt werden, insbesondere eine Alarmmeldungstext.

12. Verfahren nach einem der Ansprüche 9 bis 11, bei dem das variable Bildelement (12) mit einer Mehrzahl von Referenzen auf bestimmte aufkommbare Alarmmeldungen und die bestimmten aufkommbaren Alarmmeldungen jeweils mit einer Referenz auf ein Objekt (14) versehen wird, derart, dass bei einem Aufkommen eines der bestimmten aufkommbaren Alarmmeldungen das jeweilige referenzierte Objekt (14) in dem variablen Bildelement (12) visuell und gegebenenfalls akustisch dargestellt wird.

13. Verfahren nach einem der Ansprüche 9 bis 12, bei dem für den Fall, dass mehrere der referenzierten aufkommbaren Alarmmeldungen in einem gleichen Zeitraum aufkommen, das Objekt (14) in dem variablen Bildelement (12) dargestellt wird, welches von derjenigen aufkommenden Alarmmeldung referenziert ist, welche eine höchste Priorität oder einen jüngsten Zeitrang aufweist oder welche nicht quittiert ist.

14. Verfahren nach einem der Ansprüche 9 bis 12, bei dem für den Fall, dass mehrere der referenzierten aufkommbaren Alarmmeldungen in einem gleichen Zeitraum aufkommen, die von den aufkommenden Alarmmeldungen referenzierten Objekte (14) von einem Operator des Leitsystems (1) manuell wechselbar oder in einem automatischen zeitlichen Wechsel dargestellt werden.

15. Verfahren nach einem der Ansprüche 9 bis 14, bei dem in einem Zeitbereich, in dem keine der bestimmten Alarmmeldungen aufkommt, in dem variablen Bildelement (12) eine visuelle und ggf. akustische Darstellung eines von dem oder den referenzierten Objekten (14) verschiedenen Objektes (14) erzeugt wird.
